# EUROPEAN PATENT SPECIFICATION

(11) **EP 2 834 168 B1**
(45) Date of publication and mention of the grant of the patent: **25.04.2018**
(21) Application number: 13724374.7
(22) Date of filing: 26.03.2013
(51) Int. Cl.: B65D 85/804

(54) **CAPSULE FOR BEVERAGE AND METHOD FOR MANUFACTURING SAID CAPSULE**
KAPSEL FÜR EIN GETRÄNK UND VERFAHREN ZUR HERSTELLUNG BESAGTER KAPSEL
CAPSULE POUR BOISSON ET SON PROCÉDÉ DE FABRICATION

(30) Priority: 26.03.2012 IT MO20120080; 26.03.2012 IT MO20120081
(43) Date of publication of application: 11.02.2015
(73) Proprietor: Sarong Societa' Per Azioni, 42046 Reggiolo (RE) (IT)
(72) Inventor: BARTOLI, Andrea, I-42123 Reggio Emilia (IT); CAPITINI, Davide, I-42123 Reggio Emilia (IT)
(74) Representative: Molinari, Marinella
(86) International application number: PCT/IB2013/052397
(87) International publication number: WO 2013/144838

(56) References cited:
- EP-A1- 2 151 313
- FR-A3- 2 946 854
- US-A1- 2010 015 307
- US-A1- 2010 203 198
- US-A1- 2011 079 152
- US-A1- 2011 274 794

## Description

The invention relates to capsules or containers for preparing products, for example beverages, in automatic dispensing machines. In particular, the invention relates to a sealed, single-dose and disposable capsule containing an initial product which is able to make a final product by interacting with pressurised fluid.

The invention further relates to a method for making this capsule.

Known capsules for use in dispensing machines are disposable and single-dose containers comprising an external casing that is made of plastic material and which is impermeable to liquids and gases and is glass or cup-shaped. The casing has a bottom wall and a side wall defining an upper opening through which the product can be inserted from which to obtain the beverage. The upper opening is closed hermetically by a cover element, a film of aluminium or plastics, such as to seal the product inside the container. The cover element is generally fixed to a peripheral and annular flange-shaped edge of the casing, which is opposite the bottom wall and arranged around the upper opening.

The capsule is perforable to enable the pressurised liquid, typically water, to be delivered, and the obtained beverage to exit. In particular, the cover and the bottom wall of the casing are perforable by suitable means of a dispensing machine to enable respectively the pressurised liquid to be delivered from above and the beverage to be extracted from below.

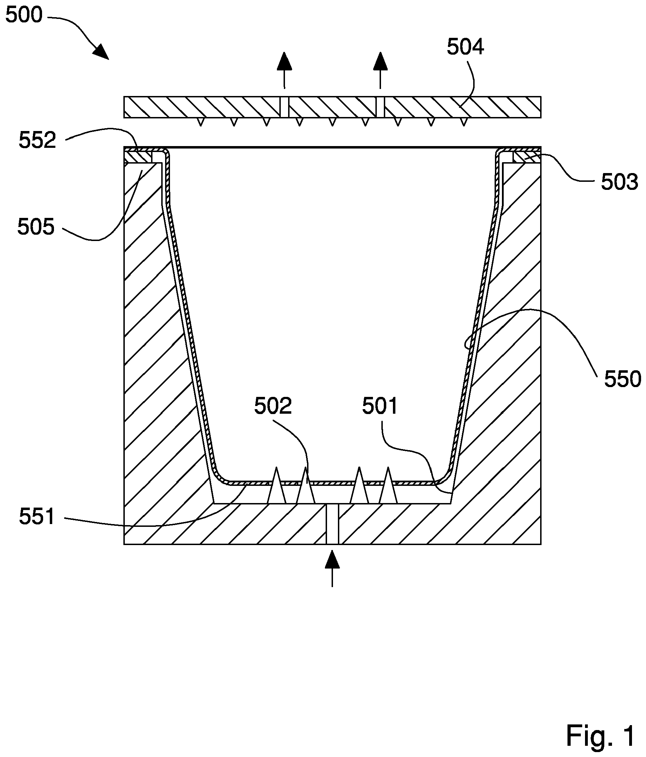

As illustrated schematically in figure 1, a dispensing machine 500 of known type comprises a housing 501 arranged for receiving and enclosing a capsule 550. A bottom portion of the housing 501 is provided with perforating means 502 to pierce a bottom wall 551 of the capsule 550 and inject the pressurised fluid or extract the beverage therefrom. In order to prevent, during use, the fluid or beverage exiting from the housing 501 because of the high operating pressure, sealing means 503 have to be interposed between the capsule 550 and the housing 501.

The sealing means 503 generally comprises an annular washer, made of elastomeric material, interposed between a flange edge 552 of the capsule 550 and an abutting portion 505 of the housing 501. When the capsule 550 is closed in the housing 501, the washer 503 is compressed by a perforating element 504, thus ensuring the hydraulic seal.

One drawback of such a solution lies in the fact that the washer, in addition to be subjected to wear and deterioration with use, comes into contact with the product and/or the fluid at each dispensing without being able to be appropriately washed subsequently. From a hygiene point of view this solution is then not optimum.

In order to overcome this drawback, capsules are known that comprise a sealing element made of yieldable, typically elastomeric, material that ensures the seal being crushed when the capsule is inserted into the dispensing machine. These capsules can also be used in dispensing machines that are devoid of sealing means.

Patent EP 1654966 illustrates a capsule for beverages comprising an elastic sealing element made of elastomeric material that is different from the one used for forming the capsule. The elastic element can be fixed to the casing of the capsule at a peripheral edge or a bottom wall of said casing.

A capsule of this type is nevertheless very costly because a suitable sealing element has to be made and fixed to the casing of the capsule.

Documents US 2010/015307, EP 2151313, US 2011/079152, FR 2946854 and US 2010/203198 illustrate the preamble of claims 1, 9, 11 and 16.

WO2013/046014 A1 and WO2013/136209 A1 disclose capsules having a projection or a particular shape in order to reach a sealing effect.

EP2412645 A1 discloses a capsule having a body formed from a single piece of thermoplastic material and extending along a main axis and a method of manufacturing a pre-filled infusion capsule.

US2010/0178392 A1 discloses a single-use capsule for preparing a food liquid from a food substance contained in the capsule by introducing water in the capsule and passing water through the substance using centrifugal forces.

One object of the present invention is to improve known capsules for beverages, in particular capsules that are usable in known dispensing machines provided with a housing that is suitable for containing and sealingly enclosing a capsule.

Another object is to make a capsule that is usable in known dispensing machines that ensures the seal during dispensing without the need for specific housing sealing means.

A further object is to obtain a cheap capsule that is simple to make.

In a first aspect of the invention a capsule according to claim 1 is provided.

In a second aspect of the invention a method for making a capsule according to claim 9 is provided.

In a third aspect of the invention, a capsule according to claim 11 is provided.

In a fourth aspect of the invention, a method for making a capsule according to claim 16 is provided.

The invention can be better understood and implemented with reference to the attached drawings that illustrate some embodiments thereof by way of non-limiting example, in which:
Figure 1 is a schematic cross section of a known capsule for beverages associated with a dispensing machine that is also of known type;
Figure 2 is a schematic cross section of a capsule according to the invention associated with a dispensing machine, which is partially illustrated;
Figure 3 is a partial schematic cross section of the capsule in figure 2 associated with a different dispensing machine;
Figure 4 is a partial schematic cross section of the capsule in figure 2 associated with another different dispensing machine;
Figure 5 is a schematic cross section of a version of the capsule in figure 2;
Figure 6 is a schematic section of another version of the capsule in figure 2;
Figure 7 is a schematic section of still another version of the capsule;
Figure 8 is a schematic section of a further version of the capsule.

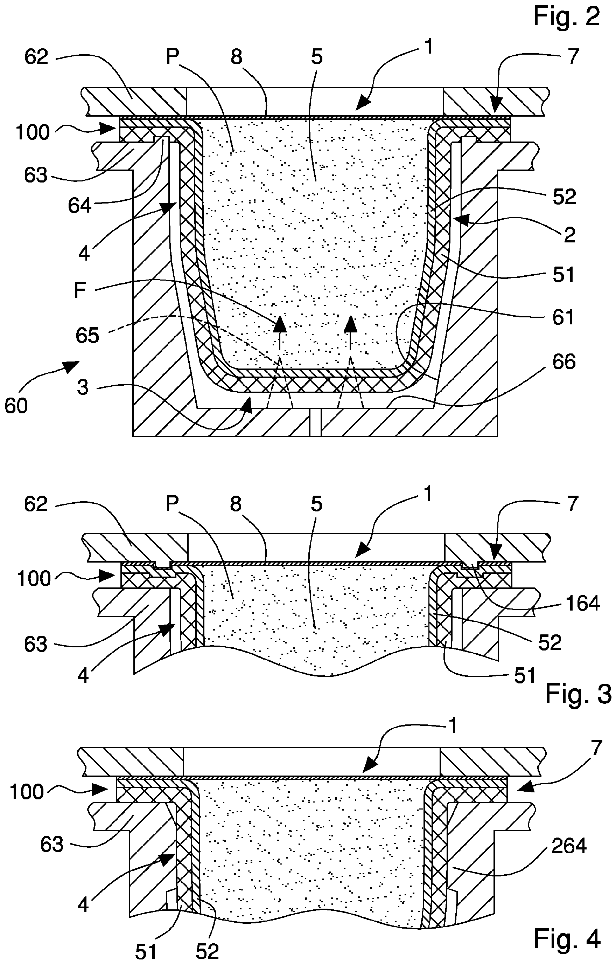

With reference to figure 2, a capsule 1 for beverages according to the invention is illustrated, which is usable in a dispensing machine 60, disclosed below, for producing a final product, in particular a hot beverage, for example coffee, barley, herbal tea, tea, chocolate, etc., by injecting a hot pressurised fluid F therein.

The capsule 1 comprises an external casing or container 2, which is substantially glass or cup-shaped, provided with a base wall 3 and with a first side wall 4 defining an open cavity 5 and which is suitable for containing an initial product P, for example a soluble or percolable food product to be combined with a fluid, typically water, to obtain a final product.

The casing comprises a flange-shaped edge 7 connected to the side wall 4 and arranged around the opening of the cavity 5. The edge 7 is further opposite the base wall 3 and turned outwards with respect to the cavity 5.

The casing 2 is made by forming a sheet of thermoformable plastic material 100 which comprises at least a first layer 51 of soft and/or deformable i.e. yieldable material arranged for being deformed, accommodated on and sealingly engaged with abutting means 64 of the dispensing machine 60, when the layer is compressed. In particular, the first layer 51 when compressed against the abutting means 64 substantially assumes the shape of the abutting means 64 so as to ensure a seal that prevents pressurised fluid or final product from exiting.

The sheet 100 further comprises a second layer 52 of appropriate material that is suitable to contact the initial product P. More precisely, the second layer 52 is inside and in contact with the initial product P, whereas the first layer 51 is outside and not in contact with the product.

The material of the second layer 52, in addition to being suitable for contact with the initial product, for example food or cosmetic or pharmaceutical product, is suitable for the process of preparing the final product, the material being for example able to withstand temperatures up to 100°C and pressure up to 5 bar without being deformed.

The material of the first layer 51 is yieldable, i.e. soft and/or deformable in such a manner as to take on the shape of the abutting means 64 to ensure by virtue of the contact pressure the seal between the capsule 1 and the abutting means 64, as illustrated better below in the description.

The first layer 51 and the second layer 52 of the sheet are, in particular, co-extruded layers, i.e. layers coupled during the process of extrusion to form the multilayered sheet 100.

Alternatively, the two layers 51, 52 can be extruded separately and coupled subsequently. In a first embodiment the first layer 51 is made of expanded plastic material, in particular one among expanded polyethylene (PET), expanded polypropylene (PP), expanded polystyrene (PS), expanded polyvinyl chloride (PVC), expanded polyamide (PA). Said expanded plastic material has, in particular, a substantially spongy cellular structure with open cell.

In a second embodiment the first layer 51 is made of foamed plastic material.

In a third embodiment the first layer 51 is made of elastomeric material, for example a film of silicone or rubber.

The first layer 51 has a thickness comprised between 200 and 1000 µm, in particular between 300 and 800 µm. The second layer 52 has a thickness comprised between 50 and 800 µm, in particular between 50 and 300 µm.

The capsule further comprises a cover element 8 that is fixed to the edge 7 of the casing 2 for hermetically closing the capsule 1, i.e. the cavity 5 and thus preserve the product P. The cover element 8 comprises a film of aluminium or plastic that is perforable by means for injecting the fluid or means for extracting the final product of the dispensing machine 60. The cover element 8 is fixed to the edge 7 of the casing 2 by thermal or ultrasound welding, or by gluing.

As illustrated in figure 2, the dispensing machine 60, which is of known type and is not disclosed in detail, comprises a seat or space 61 that is suitable for receiving and containing the capsule 1 and locking means 62 arranged for locking firmly the capsule 1 inside the aforesaid space 61 in an operating configuration.

In one condition of use, the flange edge 7 of the capsule 1 is clamped and compressed in the dispensing machine 60, in particular between the locking means 62 and a supporting portion 63 of the space 61.

The locking means 62 comprises, for example, an annular plate that acts on the edge 7 of the casing 2.

Abutting means 64 is provided on the supporting portion 63 of the space 61 and comprises one or more annular ridges that abut on the first layer 51 at the edge 7. As the first layer is made of yieldable, i.e. soft and/or deformable plastic material, owing to the contact pressure generated by the locking means 62 in the operating or use configuration, this first layer is deformed locally and substantially takes on the shape of the abutting means 64, in particular of the annular ridges. This deformation, together with the contact pressure, ensures an optimum seal of the edge 7 with the supporting portion 63 of the space 61, this seal preventing pressurised fluid or final product from exiting from the aforesaid space 61 during a dispensing operating step.

The capsule 1 thus ensures an optimum seal inside the dispensing machine, during the dispensing step without requiring the use of specific washers associated with the dispensing machine and/or with the capsule.

In this manner, optimum hygiene conditions are ensured in the dispensing procedure and modest capsule production costs, as the capsule can be obtained easily and rapidly by thermoforming of a sheet of multilayered plastic material. Further, the capsule can be adapted to the different embodiments of the abutting means and/or of the abutting portions of the dispensing machines, without the need to make different edges 7 shaped for different abutting means and/or abutting portions. This enables production costs to be reduced considerably.

In the embodiment illustrated in figure 2, the dispensing machine 60 comprises injection means 65 for injecting the fluid that is located on the bottom 66 of the space 61 and is arranged for piercing the base wall 3 of the capsule and injecting the pressurised fluid into the cavity 5.

Extraction means is provided for piercing the cover element 8 so as to enable the final product to exit the capsule 1.

Alternatively, the dispensing machine can comprise injection means arranged for piercing the cover element 8 and delivering into the cavity 5 the fluid to be combined with the initial product P and extraction means located on the bottom 66 of the space 61 for piercing the base wall 3 and enabling the final product to exit.

Figure 3 illustrates a version of the dispensing machine 60 in which the abutting means 164 is made on the locking means 62. In this case, in one condition of use with the edge 7 clamped and compressed between the locking means 62 and the supporting portion 63 of the space 1, beyond the first layer 51, the second layer 52 is also deformed locally, which is directly in contact with and abuts on the annular ridges of the abutting means 164. The seal of the edge 7 with the supporting portion 63 of the space 61, which prevents the pressurised fluid or final product from exiting the space 61, is always ensured by the local deformation and contact pressure that are achieved by the first layer 51, which this time is in contact with the supporting portion 63.

Figure 4 illustrates another version of the dispensing machine in which the abutting means 264 comprises an annular ridge that is made inside the space 61 and is intended to abut on and compress the first layer 51 at a portion, for example an upper portion, of the side wall 4 of the casing 2.

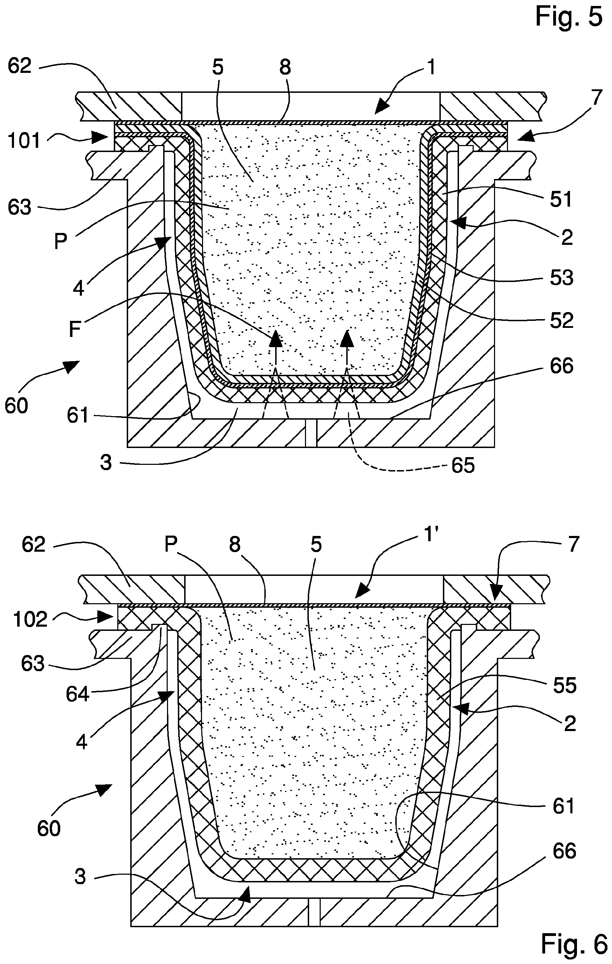

With reference to figure 5, a version of the capsule 1 is illustrated in which the sheet 101 of plastic material with which the casing 2 is made by thermoforming, also comprises a third layer 53 interposed between the first layer 51 and the second layer 52, said third layer 53 being made of a material that is impermeable, in particular to oxygen and to humidity. The aforesaid third layer 53, which is commonly known as a barrier layer, and used for ensuring complete insulation of the external environment of the cavity 5, in particular if the first layer 51 and the second layer 52 are permeable over time to oxygen and humidity.

The third layer 53 has a thickness comprised between 10 and 100 mm, in particular between 60 and 80 mm, and is for example made of one among ethylene vinyl alcohol (EVOH), polyvinylidene chloride (PVDC), polyamide (PA).

The method for making the capsule 1 disclosed above provides in a first step for making the sheet 100 of plastic material by coextruding or separately extruding and subsequent coupling of a first layer 51 made of yieldable i.e. deformable and/or soft material, in particular of expanded plastic material or of elastomeric material, and a second layer 52 of appropriate material that is suitable for contacting and preserving the initial product P.

Subsequently, in a second step, the sheet 100 is thermoformed in such a manner as to form at least one casing 2 provided with a base wall 3 and with a side wall 4 defining a cavity 5 that is suitable for containing the initial product P.

Once the cavity 5 has been filled with a dose of initial product P, the casing 2 can be hermetically closed, isolating the cavity 5 with the initial product P from the external environment, fixing a cover element 8 to an edge 7 of the casing 2.

With reference to figure 6, a version of the capsule 1' is illustrated that differs from the embodiments disclosed above by the fact that the casing 2 is made by forming a sheet of thermoformable plastic material 102 comprising only the first layer 55 made of yieldable i.e. deformable and/or soft material arranged for being deformed, accommodated on and sealingly engaged with abutting means 64 of the dispensing machine 60, when it is compressed.

The material of the first layer 55 is further suitable for contact with the initial product P and for the process of preparing the final product, which is for example able to withstand temperatures up to 100°C and pressure up to 5 bar.

The method for making this capsule 1' provides for thermoforming the sheet 102 so as to form the casing 2 provided with a base wall 3 and with a side wall 4 defining a cavity 5 that is suitable for containing the initial product P.

Once the cavity 5 has been filled with a dose of initial product P, the casing 2 can be hermetically closed, by insulating the cavity 5 with the initial product P from the external environment, fixing a cover element 8 to an edge 7 of the casing 2.

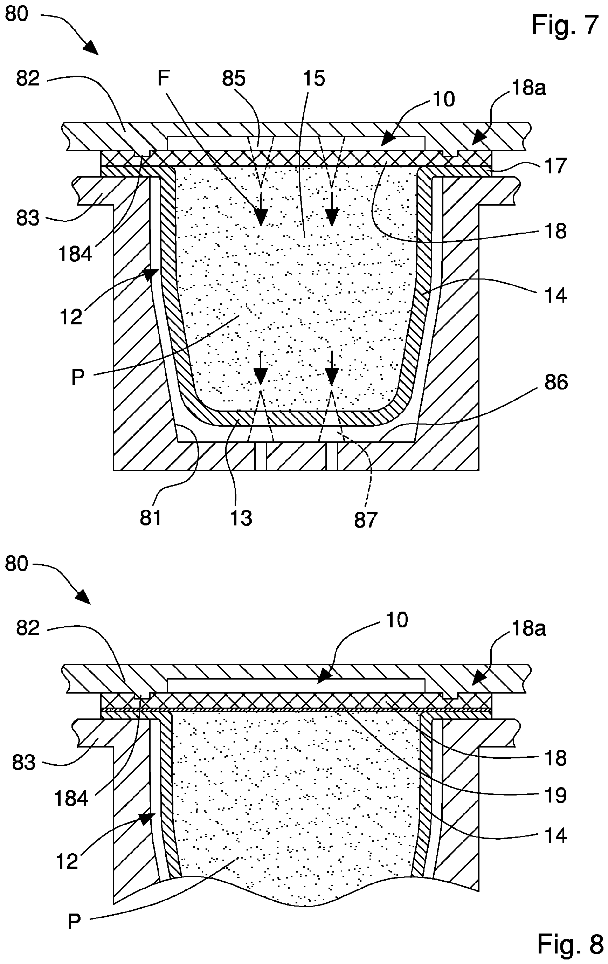

With reference to figure 7 the capsule for beverages according to the invention is illustrated that is usable in a dispensing machine 80 that is similar to the dispensing machine disclosed above.

The capsule 10 comprises a casing 12 that is substantially glass or cup-shaped, provided with a base wall 13 and with a side wall 14 defining a cavity 15 that is open and suitable for containing the initial product P to be combined with a fluid, typically water, to obtain a final product.

The casing 12 comprises a flange-shaped edge 17 connected to the side wall 14 and arranged inside the opening of the cavity 15. The edge 17 is opposite the base wall 13 and turns outwards with respect to the cavity 15.

The casing 12 is made by forming a sheet of thermoformable plastic material that is suitable for contact with the initial product P, for example food or cosmetic or pharmaceutical product, and for the process of preparing the final product, which is for example able to withstand temperatures up to 100°C and pressure up to 5 bar without deformation.

The capsule 10 also comprises a cover element 18 that is fixed to the edge 17 of the casing 12 such as to seal hermetically the cavity 15 and preserve the initial product P contained therein. The cover element 18 is made of soft and/or deformable i.e. yieldable plastic material arranged for deforming and sealingly engaging, when compressed, with the abutting means 184 of the dispensing machine 80 in a use condition, as explained better further on in the description.

The cover element 18 is fixed to the edge 17 by thermal or ultrasound welding or by gluing.

The plastic material of the cover element 18 is yieldable, i.e. soft and/or deformable in such a manner as to take on the shape of the abutting means 184 when compressed and ensure by virtue of the contact pressure the seal between the capsule 10 and the abutting means 184.

In a first embodiment the cover element 18 is made of expanded plastic material, in particular one among expanded polyethylene (PET), expanded polypropylene (PP), expanded polystyrene (PS), expanded polyvinyl chloride (PVC), expanded polyamide (PA). Said expanded plastic material has, in particular, a substantially spongy cellular structure with open cell.

In a second embodiment the cover element 18 is made of foamed plastic material.

In a third embodiment the cover element 18 is made of elastomeric thermoplastic material.

The cover element 18 has a thickness comprised between 200 and 1000 µm, in particular between 300 and 800 µm.

The material of the cover element 18 is further suitable for contact with the initial product P, for example a food or cosmetic or pharmaceutical product, and for the process of preparing the final product, which is for example able to withstand temperatures up to 100°C and pressure up to 5 bar without deformation.

The cover element 8 is further perforable by injection means for injecting the fluid or by extraction means for extracting the final product of the dispensing machine 80.

As illustrated in figure 7, the dispensing machine 80 comprises a space 81 that is suitable for receiving and containing the capsule 1 and locking means 82 arranged for firmly locking the capsule 10 inside the aforesaid space 81 in a use condition.

In such a use condition, the flanged edge 17 of the capsule 10 and the cover element 18 are clamped and compressed in the dispensing machine 80, in particular between the locking means 82 and a supporting portion 83 of the space 81.

The locking means 82 comprises, for example, an annular plate that acts on the edge 17 of the casing 12 and on an annular peripheral portion 18a of the cover element 18.

Abutting means 184 is made on the locking means 82 and comprises one or more annular ridges that abut on the annular peripheral portion 18a of the cover element 18. As the latter is made of yieldable, i.e. soft and/or deformable plastic material, because of the contact pressure generated by the locking means 82 (in cooperation with the supporting portion 83 of the space 81), the cover element 18 deforms locally and substantially takes on the shape of the abutting means 184, in particular of the annular ridges of the latter. This deformation, together with the contact pressure, ensures an optimum seal of the edge 17 with the supporting portion 83 of the space 81 and with the locking means 82, said seal preventing pressurised fluid or final product from exiting during a dispensing operating step.

The capsule 10 of the invention thus ensures an optimum seal inside the dispensing machine, during the dispensing step without requiring the use of specific washers associated with the dispensing machine and/or with the capsule.

In the embodiment illustrated in figure 7, the dispensing machine 80 comprises injection means 85 arranged for piercing the cover element 18 and delivering into the cavity 15 the fluid F to be combined with the initial product P and extraction means 87 located on the bottom 86 of the space 81 to pierce the base wall 13 and enable the final product to exit.

Alternatively, the dispensing machine 80 can comprise injection means for injecting the fluid, the injection means being located on the bottom 86 of the space 81 and being arranged for piercing the base wall 13 of the capsule 10 and injecting the pressurised fluid into the cavity 15. Extraction means is provided for piercing the cover element 18 so as to enable the final product to exit the capsule 1.

The method for making the capsule 10 disclosed above provides in a first step for forming a sheet of thermoformable plastics so as to make a casing 12 provided with a base wall 13 and with a side wall 14 defining a cavity 15.

Subsequently, in a second step, the cavity 15 is filled with a dose of initial product P.

In a third step, a cover element 18 is fixed to an edge 17 of the casing 12 such as to seal hermetically the cavity 15, the cover element 18 being made of deformable and/or soft i.e. yieldable plastic material arranged for being deformed to sealingly engage, when compressed, with the abutting means 184 of the dispensing machine 80.

Figure 8 illustrates another version of the capsule 10 that differs from the embodiment shown in figure 7 by the fact that it comprises a further cover element 19 associated with the cover element 18 and interposed between the latter and the edge 17 in such a manner as to face the cavity 15. The further cover element 19 is made of a material that is impermeable, in particular to oxygen and to humidity.

The aforesaid further cover element 19, which is commonly known as a barrier layer, is used to ensure complete insulation of the cavity 15 from the external environment, in particular if the cover element 18 is made of plastic material that is permeable over time to oxygen and to humidity.

The further barrier element 19 has a thickness comprised between 10 and 100 mm, in particular between 60 and 80 mm, and is made, for example, of one among ethylene vinyl alcohol (EVOH), polyvinylidene chloride (PVDC), polyamide (PA).

## Claims

1. Capsule for beverages comprising a casing (2) provided with a base wall (3) and with a side wall (4) defining a cavity (5) that is suitable for containing an initial product (P) to be combined with a fluid (F) to obtain a final product in a dispensing machine (60) into which said capsule (10) is insertible, said casing (12) comprising a flange-shaped edge (17) connected to the side wall (4) and arranged for being clamped and compressed in a condition of use in said dispensing machine (60), said capsule (1) being **characterised in that** said casing (2) is made with a sheet (100; 101; 102) of thermoformable plastic material which comprises at least a first layer (51; 55) made of a material so yieldable that said casing (2) is deformed by and takes on the shape of abutting means (64; 164; 264) of said dispensing machine (60) when compressed in said dispensing machine (60), in such a manner as to sealingly engage said abutting means (64; 164; 264), said first layer (51; 55) being made of expanded plastic material, or one expanded plastic material chosen among expanded polyethylene, expanded polypropylene, expanded polystyrene, expanded polyvinyl chloride, expanded polyamide or is made of foamed plastic material or elastomeric material or elastomeric material chosen among rubber or silicone.

2. Capsule according to claim 1, wherein said sheet (100; 101) of thermoformable plastic material comprises a second layer (52) of material that is suitable for contacting and/or preserving said initial product (P).

3. Capsule according to claim 1 or 2, wherein said first layer (51; 55) made of yieldable material is a material suitable for contacting and/or preserving said initial product (P).

4. Capsule according to any one of claims 1 to 3, wherein said first layer (51; 55) has a thickness comprised between 200 and 1000 µm, or comprised between 300 and 800 µm.

5. Capsule according to claim 2, wherein said first layer (51) and said second layer (52) are co-extruded to form said sheet (100) of thermoformable plastic material or are separately extruded and subsequently coupled to form said sheet (100) of thermoformable plastic material.

6. Capsule according to claim 2 or 5, wherein said second layer (52) has a thickness comprised between 50 e 800 µm, or between 50 and 300 µm.

7. Capsule according to claim 2 or 5 or 6, wherein said sheet (102) of thermoformable material comprises a third layer (53) interposed between said first layer (51) and said second layer (52), said third layer (53) being made of a material that is impermeable to oxygen and to humidity.

8. Capsule according to any one of claims 1 to 7, comprising a cover element (8) fixed to an edge (7) of said casing (2) to seal hermetically said cavity (5), said cover element (8) being perforable by injection means or extraction means of said dispensing machine (60).

9. Method for making a capsule (1) for beverages comprising thermoforming a sheet (100; 101; 102) of thermoformable plastic material which comprises at least a first layer (51; 55) so as to form a casing (2) of said capsule (1) provided with a base wall (3) and with a side wall (4) defining a cavity (5) that is suitable for containing an initial product (P), said first layer being made of a material so yieldable that said casing (2) is deformed by and takes on the shape of abutting means (64; 164; 264) of a dispensing machine (60) when compressed in said dispensing machine (60), said first layer (51; 55) being made of expanded plastic material, or one expanded plastic material chosen among expanded polyethylene, expanded polypropylene, expanded polystyrene, expanded polyvinyl chloride, expanded polyamide or is made of foamed plastic material or elastomeric material or elastomeric material chosen among rubber or silicone.

10. Method according to claim 9, comprising, before said thermoforming:
- making said sheet (101; 102) of thermoformable plastic material by coextruding said first layer (51) and a second layer (52) of plastic material which is suitable for contacting and/or preserving said initial product (P);
or
- making said sheet (101; 102) of thermoformable plastic material by separately extruding and subsequently coupling said first layer (51) and a second layer (52) of appropriate plastic material that is suitable for contacting and/or preserving said initial product (P).

11. Capsule for beverages comprising a casing (12) provided with a base wall (13) and with a side wall (14) defining a cavity (15) that is suitable for containing an initial product (P) to be combined with a fluid (F) to obtain a final product in a dispensing machine (80) into which said capsule (10) is insertible, said casing (12) comprising a flange-shaped edge (17) connected to said side wall (4) and arranged for being clamped and compressed in a condition of use in said dispensing machine (80), said capsule (10) comprising a cover element (18) fixed to said edge (17) to seal hermetically said cavity (15), said capsule (10) being **characterised in that** said cover element (18) is made of plastics so yieldable that said cover element (18) is deformed by and takes on the shape of abutting means (184) of said dispensing machine (80) when compressed in said dispensing machine (80), in such a manner as to sealingly engage said abutting means (184), said cover element (18) being made of expanded plastic material, or of one expanded plastic material chosen among expanded polyethylene, expanded polypropylene, expanded polystyrene, expanded polyvinyl chloride, expanded polyamide, or is made of foamed plastic material or is made of elastomeric plastic material.

12. Capsule according to claim 11, wherein said cover element (18) has a thickness comprised between 200 and 1000 µm, or comprised between 300 and 800 µm.

13. Capsule according to claim 11 or 12, wherein said cover element (18) is perforable by injection means or extraction means of said dispensing machine (80).

14. Capsule according to any one of claims 11 to 13, comprising a further cover element (19) associated with said cover element (18) and interposed between the latter and said edge (17) in such a manner as to face said cavity (15), said further cover element (19) being made of a material that is impermeable to oxygen and to humidity.

15. Capsule according to any one of claims 11 to 14, wherein said casing (12) is made by forming a sheet of thermoformable plastic material.

16. Method for making a capsule (10) for beverages containing an initial product (P), comprising the steps of:
- forming a sheet of thermoformable plastic material so as to make a casing (12) provided with a base wall (13) and with a side wall (14) defining a cavity (15);
- filling said cavity (15) with said initial product (P);
- fixing a cover element (18) to an edge (17) of said casing (12) such as to seal hermetically said cavity (15), said cover element (18) being made of a plastic material so yieldable that said cover element (18) is deformed and accommodated on, when compressed in a dispensing machine (80), abutting means (184) of a dispensing machine (80) into which said capsule (10) is insertible, said cover element (18) being made of expanded plastic material, or of one expanded plastic material chosen among expanded polyethylene, expanded polypropylene, expanded polystyrene, expanded polyvinyl chloride, expanded polyamide, or is made of foamed plastic material or is made of elastomeric plastic material.

## Patentansprüche

1. Kapsel für Getränke mit einem Gehäuse (2), das eine Basiswand (3) und eine Seitenwand (4) aufweist, die einen Hohlraum (5) definieren, der geeignet ist, ein Anfangsprodukt (P) aufzunehmen, das in einer Ausgabemaschine (60), in welche die Kapsel (10) einführbar ist, mit einem Fluid (F) kombinierbar ist, um ein Endprodukt zu erhalten, wobei das Gehäuse (12) einen flanschförmigen Rand (17) aufweist, der mit der Seitenwand (4) verbunden ist und dazu angeordnet ist, in einem Zustand der Verwendung in der Ausgabemaschine (60) geklemmt und gepresst zu werden, wobei die Kapsel (1) **dadurch gekennzeichnet ist, dass** das Gehäuse (2) aus einer Folie (100; 101; 102) aus thermisch verformbaren Kunststoffmaterial hergestellt ist, die eine erste Schicht (51; 55) aufweist, die aus einem nachgiebigen Material besteht, so dass das Gehäuse (2) mittels Anlagemitteln (64; 164; 264) in der Ausgabemaschine (60) verformt wird und deren Form annimmt, wenn sie in der Ausgabemaschine (60) auf eine solche Weise zusammengedrückt wird, so dass sie dichtend an den Anlagemitteln (64; 164; 264) anliegt, wobei die erste Schicht (51; 55) aus einem expandierten Kunststoffmaterial hergestellt ist oder aus einem expandierten Kunststoffmaterial, das aus expandiertem Polyethylen, expandiertem Polypropylen, expandiertem Polystyrol, expandiertem Polyvinylchlorid, expandiertem Polyamid besteht oder aus einem geschäumten Kunststoffmaterial oder einem elastomeren Material oder einem elastomeren Material, das aus Gummi oder Silikon ausgewählt ist.

2. Kapsel nach Anspruch 1, bei dem die Folie (100; 101) aus thermisch verformbarem Kunststoffmaterial eine zweite Schicht (52) aus Material aufweist, das geeignet ist, um das Anfangsprodukt (P) zu kontaktieren und/oder zu konservieren.

3. Kapsel nach Anspruch 1 oder 2, bei der die erste Schicht (51; 55), die aus nachgiebigem Material hergestellt ist, eine Schicht ist, die geeignet ist, das Anfangsprodukt (P) zu kontaktieren und/oder zu konservieren.

4. Kapsel nach irgendeinem der Ansprüche 1 bis 3, bei der die erste Schicht (51; 55) eine Dicke hat, die zwischen 200 und 1000 µm liegt, oder die zwischen 300 und 800 µm liegt.

5. Kapsel nach Anspruch 2, bei der die erste Schicht (51) und die zweite Schicht (52) co-extrudiert sind, um die Schicht (100) aus thermisch verformbarem Kunststoffmaterial zu bilden, oder die voneinander getrennt extrudiert sind und nachfolgend miteinander verbunden sind, um die Folie (100) aus dem thermisch verformbaren Kunststoffmaterial zu bilden.

6. Kapsel nach Anspruch 2 oder 5, bei der die zweite Schicht (52) eine Dicke hat, die zwischen 50 und 800 µm oder zwischen 50 und 300 µm liegt.

7. Kapsel nach Anspruch 2 oder 5 oder 6, bei der die Folie (102) aus dem thermisch verformbaren Material eine dritte Schicht (53) aufweist, die zwischen der ersten Schicht (51) und der zweiten Schicht (52) angeordnet ist, wobei die dritte Schicht (53) aus einem Material besteht, die gegenüber Sauerstoff und gegenüber Feuchtigkeit undurchlässig ist.

8. Kapsel nach irgendeinem der Anspruche 1 bis 7, die ferner ein Deckelement (8) aufweist, das an einem Rand (7) des Gehäuses (2) befestigt ist, um den Hohlraum (5) hermetisch abzudichten, wobei das Deckelement (8) durch ein Injektionsmittel oder ein Extraktionsmittel der Ausgabemaschine (60) perforierbar ist.

9. Verfahren zum Herstellen einer Kapsel (1) für Getränke umfassend die folgenden Schritte: thermisches Verformen einer Folie (100; 101; 102) aus thermisch verformbarem Kunststoffmaterial, die wenigstens eine erste Schicht (51; 55) aufweist, um so ein Gehäuse (2) der Kapsel (1) zu bilden, versehen mit einer Basiswand (3) und einer Seitenwand (4), die einen Hohlraum (5) definieren, der geeignet ist, um ein Anfangsprodukt (P) zu enthalten, wobei die erste Schicht aus einem Material hergestellt ist, das derart nachgiebig ist, dass das Gehäuse (2) durch Anlagemittel (64; 164; 264) einer Ausgabemaschine (60) deformierbar ist und deren Form annimmt, wenn sie in der Ausgabemaschine (60) komprimiert wird, wobei die erste Schicht (51; 55) aus einem expandierten Kunststoffmaterial oder einem expandierten Kunststoffmaterial besteht, das ausgewählt ist aus expandiertem Polyethylen, expandiertem Polypropylen, expandiertem Polystyrol, expandiertem Polyvinylchlorid, expandiertem Polyamid, oder das aus geschäumten Kunststoffmaterial oder elastomeren Material oder elastomeren Material besteht, das aus Gummi oder Silikon ausgewählt ist.

10. Verfahren nach Anspruch 9, umfassend vor dem thermischen Verformen:
- Herstellen der Folie (101; 102) aus thermisch verformbarem Kunststoffmaterial durch Co-Extrudieren der ersten Schicht (51) und einer zweiten Schicht (52) aus Kunststoffmaterial, das zum Kontaktieren und/oder Konservieren des Anfangsprodukts (P) geeignet ist; oder
- Herstellen der Folie (101; 102) aus thermisch verformbarem Kunststoffmaterial durch getrenntes Extrudieren und nachfolgendes Koppeln der ersten Schicht (51) und einer zweiten Schicht (52) aus geeignetem Kunststoffmaterial, das zum Kontaktieren und/oder Konservieren des Anfangsprodukts (P) geeignet ist.

11. Kapsel für Getränke mit einem Gehäuse (12), das mit einer Basiswand (13) und mit einer Seitenwand (14) verbunden ist, um einen Hohlraum (15) zu definieren, der geeignet ist, ein Anfangsprodukt (P) aufzunehmen, das mit einem Fluid (F) kombiniert werden kann, um ein Endprodukt in einer Ausgabemaschine (80) zu erhalten, in welche die Kapsel (10) einführbar ist, wobei das Gehäuse (12) einen flanschförmigen Rand (17) aufweist, der mit der Seitenwand (4) verbunden ist und dazu ausgebildet ist, im Zustand der Benutzung in der Ausgabemaschine (80) eingeklemmt und zusammengedrückt zu werden, wobei die Kapsel (10) ein Deckelement (18) aufweist, das an dem Rand (17) befestigt ist, um den Hohlraum (15) hermetisch abzudichten, wobei die Kapsel (10) **dadurch gekennzeichnet ist, dass** das Deckelement (18) aus Kunststoff besteht, der derart nachgiebig ist, dass das Deckelement (18) durch die Form von Anlagemitteln (184) der Ausgabemaschine (80) deformiert wird und deren Form annimmt, wenn sie in der Ausgabemaschine (80) auf eine solche Weise komprimiert wird, dass sie an den Anlagemitteln (184) dichtend anliegt, wobei das Deckelement (18) aus expandiertem Kunststoffmaterial oder aus einem expandierten Kunststoffmaterial besteht, das aus expandiertem Polyethylen, expandiertem Polypropylen, expandiertem Polystyrol, expandiertem Polyvinylchlorid, expandiertem Polyamid besteht, oder das aus einem geschäumten Kunststoffmaterial besteht oder das aus elastomerem Kunststoffmaterial besteht.

12. Kapsel nach Anspruch 11, bei der das Deckelement (18) eine Dicke aufweist, die zwischen 200 und 1000 µm liegt, oder die zwischen 300 und 800 µm liegt.

13. Kapsel nach Anspruch 11 oder 12, bei der das Deckelement (18) durch Injektionsmittel oder Extraktionsmittel der Ausgabemaschine (80) perforierbar ist.

14. Kapsel nach irgendeinem der Ansprüche 11 bis 13, die ferner ein Deckelement (19) aufweist, das mit dem Deckelement (18) zusammenhängt und zwischen dem letzteren und dem Rand (17) auf eine solche Weise angeordnet ist, dass es dem Hohlraum (15) zugewandt ist, wobei das Deckelement (19) aus einem Material hergestellt ist, das gegenüber Sauerstoff und Feuchtigkeit undurchlässig ist.

15. Kapsel nach irgendeinem der Ansprüche 11 bis 14, bei der das Gehäuse (12) aus einer Folie aus thermisch verformbarem Kunststoffmaterial besteht.

16. Verfahren zum Herstellen einer Kapsel (10) für Getränke enthaltend ein Ausgangsprodukt (P) mit den folgenden Schritten:
- Formen einer Folie aus thermisch verformbarem Kunststoffmaterial, um so ein Gehäuse (12) zu bilden, das mit einer Basiswand (13) und mit einer Seitenwand (14) versehen ist, um einen Hohlraum (15) zu definieren;
- Füllen des Hohlraums (15) mit dem Anfangsprodukt (P);
- Befestigen eines Deckelements (18) an einem Rand (17) des Gehäuses (12) derart, dass der Hohlraum (15) hermetisch abgedichtet wird, wobei das Deckelement (18) aus einem Kunststoffmaterial hergestellt ist, das derart nachgiebig ist, dass das Deckelement (18) deformiert wird und darauf gehalten wird, wenn es in einer Ausgabemaschine (80) durch Anlagemittel (184) einer Ausgabemaschine (80), in welche die Kapsel (10) einführbar ist, zusammengedrückt wird, wobei das Deckelement (18) aus einem expandierten Kunststoffmaterial hergestellt ist, oder aus einem expandierten Kunststoffmaterial hergestellt ist, das aus expandiertem Polyethylen, expandiertem Polypropylen, expandiertem Polystyrol, expandiertem Polyvinylchlorid, expandiertem Polyamid ausgewählt ist, oder das aus geschäumten Kunststoffmaterial besteht, oder aus elastomerem Kunststoffmaterial besteht.

## Revendications

1. Capsule pour boissons comprenant un boîtier (2) pourvu d'une paroi de base (3) et d'une paroi latérale (4) définissant une cavité (5) qui est adaptée pour contenir un produit initial (P) devant être combiné avec un fluide (F) pour obtenir un produit final dans une machine de distribution (60) dans laquelle ladite capsule (10) peut être insérée, ledit boîtier (12) comprenant un bord en forme de collerette (17) relié à la paroi latérale (4) et agencé pour être serré et comprimé dans une condition d'utilisation dans ladite machine de distribution (60), ladite capsule (1) étant **caractérisée en ce que** ledit boîtier (2) est fabriqué avec une feuille (100; 101 ; 102) en matière plastique thermoformable qui comprend au moins une première couche (51; 55) faite d'une matière pouvant faire tellement ressort que ledit boîtier (2) est déformé par des moyens de butée (64; 164; 264) de ladite machine de distribution (60) et prend la forme de ceux-ci lorsqu'il est comprimé dans ladite machine de distribution (60), de telle manière qu'il vient en contact de manière étanche avec lesdits moyens de butée (64; 164; 264), ladite première couche (51; 55) étant faite de matière plastique expansée, ou d'une matière plastique expansée choisie parmi du polyéthylène expansé, du polypropylène expansé, du polystyrène expansé, du polychlorure de vinyle expansé, du polyamide expansé ou est faite de matière plastique en mousse ou de matière élastomère ou de matière élastomère choisie parmi un caoutchouc ou une silicone.

2. Capsule selon la revendication 1, dans laquelle ladite feuille (100; 101) de matière plastique thermoformable comprend une deuxième couche (52) de matière qui est adaptée pour venir en contact avec ledit produit initial (P) et/ou préserver celui-ci.

3. Capsule selon la revendication 1 ou 2, dans laquelle ladite première couche (51; 55) faite de matière pouvant faire ressort est une matière adaptée pour venir en contact avec ledit produit initial (P) et/ou préserver celui-ci.

4. Capsule selon l'une quelconque des revendications 1 à 3, dans laquelle ladite première couche (51; 55) a une épaisseur comprise entre 200 et 1000 µm, ou comprise entre 300 et 800 µm.

5. Capsule selon la revendication 2, dans laquelle ladite première couche (51) et ladite deuxième couche (52) sont coextrudées pour former ladite feuille (100) de matière plastique thermoformable ou sont extrudées séparément et ensuite couplées pour former ladite feuille (100) de matière plastique thermoformable.

6. Capsule selon la revendication 2 ou 5, dans laquelle ladite deuxième couche (52) a une épaisseur comprise entre 50 et 800 µm, ou entre 50 et 300 µm.

7. Capsule selon la revendication 2 ou 5 ou 6, dans laquelle ladite feuille (102) de matière thermoformable comprend une troisième couche (53) interposée entre ladite première couche (51) et ladite deuxième couche (52), ladite troisième couche (53) étant faite d'une matière qui est imperméable à l'oxygène et à l'humidité.

8. Capsule selon l'une quelconque des revendications 1 à 7, comprenant un élément de couvercle (8) fixé à un bord (7) dudit boîtier (2) pour sceller hermétiquement ladite cavité (5), ledit élément de couvercle (8) pouvant être perforé par des moyens d'injection ou des moyens d'extraction de ladite machine de distribution (60) .

9. Procédé pour faire une capsule (1) pour boissons comprenant le thermoformage d'une feuille (100; 101; 102) de matière plastique thermoformable qui comprend au moins une première couche (51; 55) de manière à former un boîtier (2) de ladite capsule (1) pourvu d'une paroi de base (3) et d'une paroi latérale (4) définissant une cavité (5) qui est adaptée pour contenir un produit initial (P), ladite première couche étant faite d'une matière pouvant faire tellement ressort que ledit boîtier (2) est déformé par des moyens de butée (64; 164; 264) d'une machine de distribution (60) et prend la forme de ceux-ci lorsqu'il est comprimé dans ladite machine de distribution (60), ladite première couche (51; 55) étant faite de matière plastique expansée, ou d'une matière plastique expansée choisie parmi du polyéthylène expansé, du polypropylène expansé, du polystyrène expansé, du polychlorure de vinyle expansé, du polyamide expansé ou est faite de matière plastique en mousse ou de matière élastomère ou de matière élastomère choisie parmi un caoutchouc ou une silicone.

10. Procédé selon la revendication 9, comprenant, avant ledit thermoformage:
- faire ladite feuille (101; 102) de matière plastique thermoformable en coextrudant ladite première couche (51) et une deuxième couche (52) de matière plastique qui est adaptée pour venir en contact avec ledit produit initial (P) et/ou préserver celui-ci;
ou
- faire ladite feuille (101; 102) de matière plastique thermoformable en extrudant séparément et en couplant ensuite ladite première couche (51) et une deuxième couche (52) de matière plastique appropriée qui est adaptée pour venir en contact avec ledit produit initial (P) et/ou préserver celui-ci.

11. Capsule pour boissons comprenant un boîtier (12) pourvu d'une paroi de base (13) et d'une paroi latérale (14) définissant une cavité (15) qui est adaptée pour contenir un produit initial (P) devant être combiné avec un fluide (F) pour obtenir un produit final dans une machine de distribution (80) dans laquelle ladite capsule (10) peut être insérée, ledit boîtier (12) comprenant un bord en forme de collerette (17) relié à ladite paroi latérale (4) et agencé pour être serré et comprimé dans une condition d'utilisation dans ladite machine de distribution (80), ladite capsule (10) comprenant un élément de couvercle (18) fixé audit bord (17) pour sceller hermétiquement ladite cavité (15), ladite capsule (10) étant **caractérisée en ce que** ledit élément de couvercle (18) est fait de matière plastique pouvant faire tellement ressort que ledit élément de couvercle (18) est déformé par des moyens de butée (184) de ladite machine de distribution (80) et prend la forme de ceux-ci lorsqu'il est comprimé dans ladite machine de distribution (80), de telle manière qu'il vient en contact de manière étanche avec lesdits moyens de butée (184), ledit élément de couvercle (18) étant fait de matière plastique expansée, ou d'une matière plastique expansée choisie parmi du polyéthylène expansé, du polypropylène expansé, du polystyrène expansé, du polychlorure de vinyle expansé, du polyamide expansé, ou est fait de matière plastique en mousse ou est fait de matière plastique élastomère.

12. Capsule selon la revendication 11, dans laquelle ledit élément de couvercle (18) a une épaisseur comprise entre 200 et 1000 µm, ou comprise entre 300 et 800 µm.

13. Capsule selon la revendication 11 ou 12, dans laquelle ledit élément de couvercle (18) peut être perforé par des moyens d'injection ou des moyens d'extraction de ladite machine de distribution (80).

14. Capsule selon l'une quelconque des revendications 11 à 13, comprenant un élément de couvercle supplémentaire (19) associé audit élément de couvercle (18) et interposé entre ce dernier et ledit bord (17) de telle manière qu'il fasse face à ladite cavité (15), ledit élément de couvercle supplémentaire (19) étant fait d'une matière qui est imperméable à l'oxygène et à l'humidité.

15. Capsule selon l'une quelconque des revendications 11 à 14, dans laquelle ledit boîtier (12) est fabriqué en formant une feuille de matière plastique thermoformable.

16. Procédé pour fabriquer une capsule (10) pour boissons contenant un produit initial (P), comprenant les étapes de:
- former une feuille de matière plastique thermoformable de manière à fabriquer un boîtier (12) pourvu d'une paroi de base (13) et d'une paroi latérale (14) définissant une cavité (15);
- remplir ladite cavité (15) avec ledit produit initial (P);
- fixer un élément de couvercle (18) à un bord (17) dudit boîtier (12) de manière à étancher hermétiquement ladite cavité (15), ledit élément de couvercle (18) étant fait de matière plastique pouvant faire tellement ressort que ledit élément de couvercle (18) est déformé et reçu, lorsque comprimé dans une machine de distribution (80), sur des moyens de butée (184) d'une machine de distribution (80) dans laquelle ladite capsule (10) peut être insérée, ledit élément de couvercle (18) étant fait de matière plastique expansée, ou d'une matière plastique expansée choisie parmi du polyéthylène expansé, du polypropylène expansé, du polystyrène expansé, du polychlorure de vinyle expansé, du polyamide expansé, ou est fait de matière plastique en mousse ou est fait de matière plastique élastomère.
